(19) Europäisches Patentamt
European Patent Office
Office européen des brevets

(11) **EP 4 521 582 A1**

(12) **EUROPEAN PATENT APPLICATION**

(43) Date of publication:
**12.03.2025 Bulletin 2025/11**

(21) Application number: **24165065.4**

(22) Date of filing: **21.03.2024**

(51) International Patent Classification (IPC):
*H02J 3/14* (2006.01)   *B60L 53/67* (2019.01)
*H02J 3/32* (2006.01)   *H02J 7/00* (2006.01)
*H02J 7/02* (2016.01)

(52) Cooperative Patent Classification (CPC):
**H02J 7/0013; B60L 53/67; H02J 3/14; H02J 3/322; H02J 7/02;** H02J 2310/48; H02J 2310/60

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.09.2023 TW 112134505**

(71) Applicant: **Delta Electronics, Inc.**
**Taoyuan City 333 (TW)**

(72) Inventors:
• **CHEN, Jyun-Kai**
**333 Taoyuan (TW)**
• **LIU, Shih-Hung**
**333 Taoyuan (TW)**
• **YEH, Tse-Hsing**
**333 Taoyuan (TW)**
• **LAI, Hung-Ren**
**333 Taoyuan (TW)**

(74) Representative: **Nederlandsch Octrooibureau**
**P.O. Box 29720**
**2502 LS The Hague (NL)**

(54) **CHARGING MANAGEMENT SYSTEM**

(57) The present disclosure provides a charging management system including a memory device and a processor. The memory device is configured to store a plurality of preset algorithms and a plurality of custom algorithms. The processor determines at least one of the preset algorithms and at least one of the custom algorithms according to a distribution strategy associated with a charging hub, to allocate an available power to a plurality of charging points of the charging hub. The processor allocates a partial amount of the available power to the charging points according to the first subset of the preset algorithms, and distributes a remaining amount of the available power to the charging points according to the first subset of the custom algorithms, in which the remaining amount of the available power is derived by subtracting the partial amount of the available power from the available power.

Fig. 1

**EP 4 521 582 A1**

**Description**

**BACKGROUND**

Field of Invention

The disclosure relates to a charging system. More particularly, the disclosure relates to a charging system capable for managing an available power of a charging hub to charge electric vehicles.

Description of Related Art

Charging stations are important facilities that supply electric power for charging electric vehicles, which contribute to the popularity of electric vehicles. Power distribution is important in an electrical vehicle charging hub, which may affect the efficiency and stability of the charging hub and is associated with the charge requirements of electric vehicles. However, the methods of power distribution in the past mostly allocate the maximum output power to charging stations for charging the electric vehicles that arrived first, causing that there cannot supply power to the other electric vehicles that arrived later if the available power has been fully allocated, and the electric vehicles that arrived later need to wait for the electric vehicles arrived first to be fully charged before charging, resulted in the waiting time to be too long and the poor user experience.

Therefore, how to dynamically adjust the power distribution of the charging hub to meet the charging requirements of several electric vehicles and to operate the charging hub in a more stable and efficient way is the important issue in this field.

**SUMMARY**

In view of various requirements of custom bases, the present disclosure provides a charging management system to let the customer can flexibly establish a combination of algorithms, so as to achieve the specific requirement.

The present disclosure provides a charging management system. The charging management system includes a memory device and a processor. The memory device is configured to store a plurality of preset algorithms and a plurality of custom algorithms. The processor is connected to the memory device. The processor is configured to determine at least one of the preset algorithms and at least one of the custom algorithms according to a distribution strategy associated with a charging hub, to allocate an available power to a plurality of charging points of the charging hub. If the processor determines to execute a first subset of the preset algorithms and a first subset of the custom algorithms according to a first distribution strategy associated with the charging hub, the processor calculates and allocates a first partial amount of the available power to the charging points according to the first subset of the preset algorithms. The processor distributes a first remaining amount of the available power to the charging points according to the first subset of the custom algorithms, in which the first remaining amount of the available power is derived by subtracting the first partial amount of the available power from the available power.

In one or more embodiments of the present disclosure, the first distribution strategy is a distribution strategy for high turn-over rate, and the first subset of the custom algorithms comprises a low charging time algorithm, an output ratio distribution algorithm and an intra-group rebalancing algorithm configured to be executed in order.

In one or more embodiments of the present disclosure, if the processor determines to execute the first subset of the preset algorithms and a second subset of the custom algorithms according to a second distribution strategy associated with the charging hub, the processor calculates and allocates the first partial amount of the available power to the charging points according to the first subset of the preset algorithms. The processor distributes the first remaining amount of the available power to the charging points according to the second subset of the custom algorithms. The second distribution strategy is a distribution strategy for location priority. The second subset of the custom algorithms comprises a location priority algorithm.

In one or more embodiments of the present disclosure, if the processor determines to execute the first subset of the preset algorithms and a third subset of the custom algorithms according to a third distribution strategy associated with the charging hub, the processor calculates and allocates the first partial amount of the available power to the charging points according to the first subset of the preset algorithms, wherein the processor distributes the first remaining amount of the available power to the charging points according to the third subset of the custom algorithms. The third distribution strategy is a distribution strategy for user experience priority. The third subset of the custom algorithms comprises a user waiting time algorithm, an output ratio distribution algorithm and an intra-group rebalancing algorithm configured to be executed in order.

In one or more embodiments of the present disclosure, the first subset of the preset algorithms comprises at least one of a minimum charging power algorithm, a low state of charge algorithm and a member distribution algorithm.

In one or more embodiments of the present disclosure, the first subset of the preset algorithms comprises a minimum charging power algorithm, a low state of charge algorithm and a member distribution algorithm configured to be executed in order.

In one or more embodiments of the present disclosure, if the processor determines to execute a second subset of the preset algorithms and a fourth subset of the custom algorithms according to a fourth distribution strategy associated with the charging hub, the processor calculates and allocates a second partial amount of the available power to the charging points according to the second subset of the preset algorithms. The processor distributes a second remaining amount of the available power to the charging points according to the fourth subset of the custom algorithms. The fourth distribution strategy is a distribution strategy for entry order priority. The fourth subset of the custom algorithms comprises a first-in first-out algorithm.

In one or more embodiments of the present disclosure, the second subset of the preset algorithms comprises a minimum charging power algorithm and a member distribution algorithm configured to be executed in order.

In one or more embodiments of the present disclosure, if the processor determines to execute a second subset of the preset algorithms and a fifth subset of the custom algorithms according to a fifth distribution strategy associated with the charging hub, the processor calculates and allocates a second partial amount of the available power to the charging points according to the second subset of the preset algorithms. The processor distributes a second remaining amount of the available power to the charging points according to the fifth subset of the custom algorithms. The fifth distribution strategy is a fair distribution strategy. The fifth subset of the custom algorithms comprises an output ratio distribution algorithm and an intra-group rebalancing algorithm configured to be executed in order.

In one or more embodiments of the present disclosure, the second subset of the preset algorithms comprises a minimum charging power algorithm and a member distribution algorithm configured to be executed in order.

In one or more embodiments of the present disclosure, the preset algorithms are general algorithms, and wherein the custom algorithms are specific algorithms.

In one or more embodiments of the present disclosure, the preset algorithms comprises a minimum charging power algorithm, a low state of charge algorithm and a member distribution algorithm.

In one or more embodiments of the present disclosure, the custom algorithms comprises a low charging time algorithm, an output ratio distribution algorithm, an intra-group rebalancing algorithm, an user waiting time algorithm, a location priority algorithm and a first-in first-out algorithm.

In one or more embodiments of the present disclosure, the processor determines the distribution strategy according to at least one of characteristics of the charging hub.

In one or more embodiments of the present disclosure, the at least one of characteristics of the charging hub comprises a classification of management of the charging hub and a location of the charging hub.

In one or more embodiments of the present disclosure, the classification of management of the charging hub is an electric vehicle charge point operator or an electric vehicle fleet operator.

In one or more embodiments of the present disclosure, the charging hub is located at a parking level of a mall building or an office building.

In one or more embodiments of the present disclosure, the distribution strategy is one of a distribution strategy for high turn-over rate, a distribution strategy for location priority, a distribution strategy for user experience priority, a distribution strategy for entry order priority and a fair distribution strategy.

In one or more embodiments of the present disclosure, the processor controls a power allocation among the charging points according to the at least one of the preset algorithms and at least one of the custom algorithms. The charging points are configured to charge a plurality of electrical vehicles according to the power allocation.

Summary, the charging management system of the present disclosure performs a twostage power distribution, in order to improve the balance between the power supply and the charging speed of the charging points in the charging hub and to increase the utilization efficiency of the charging hub.

## BRIEF DESCRIPTION OF THE DRAWINGS

The disclosure can be more fully understood by reading the following detailed description of the embodiment, with reference made to the accompanying drawings as follows:

Fig. 1 is a schematic diagram illustrating charging facilities according to some embodiments of the present disclosure.

Fig. 2 is a schematic diagram illustrating a charging management system according to some embodiments of the present disclosure.

Fig. 3 is a schematic diagram illustrating a scene under a low state of charge algorithm according to some embodiments of the present disclosure.

Fig. 4 is a schematic diagram illustrating a scene under a low charging time algorithm according to some embodiments of the present disclosure.

Fig. 5 is a schematic diagram illustrating a scene under an output ratio distribution algorithm according to some embodiments of the present disclosure.

Fig. 6 is a schematic diagram illustrating a charging management method according to some embodiments of the present disclosure.

Fig. 7 is a schematic diagram illustrating step S210 of the charging management method in Fig. 6 according to some embodiments of the present disclosure.

Fig. 8A is a schematic diagram illustrating a scene under an execution of a minimum charging power distribution algorithm according to some embodiments of the present disclosure.

Fig. 8B is a schematic diagram illustrating a scene under an execution of a low state of charge algorithm according to some embodiments of the present disclosure.

Fig. 8C is a schematic diagram illustrating a scene under an execution of a member distribution algorithm according to some embodiments of the present disclosure.

Fig. 8D is a schematic diagram illustrating a scene under an execution of a low charging time algorithm according to some embodiments of the present disclosure.

Fig. 8E is a schematic diagram illustrating a scene under an execution of an output ratio distribution algorithm according to some embodiments of the present disclosure.

Fig. 8F is a schematic diagram illustrating a scene under an execution of an intra-group rebalancing distribution algorithm according to some embodiments of the present disclosure.

Fig. 9 is a schematic diagram illustrating step S220 of the charging management method in Fig. 6 according to some embodiments of the present disclosure.

Fig. 10 is a schematic diagram illustrating step S230 of the charging management method in Fig. 6 according to some embodiments of the present disclosure.

Fig. 11 is a schematic diagram illustrating step S240 of the charging management method in Fig. 6 according to some embodiments of the present disclosure.

Fig. 12 is a schematic diagram illustrating step S250 of the charging management method in Fig. 6 according to some embodiments of the present disclosure.

## DETAILED DESCRIPTION

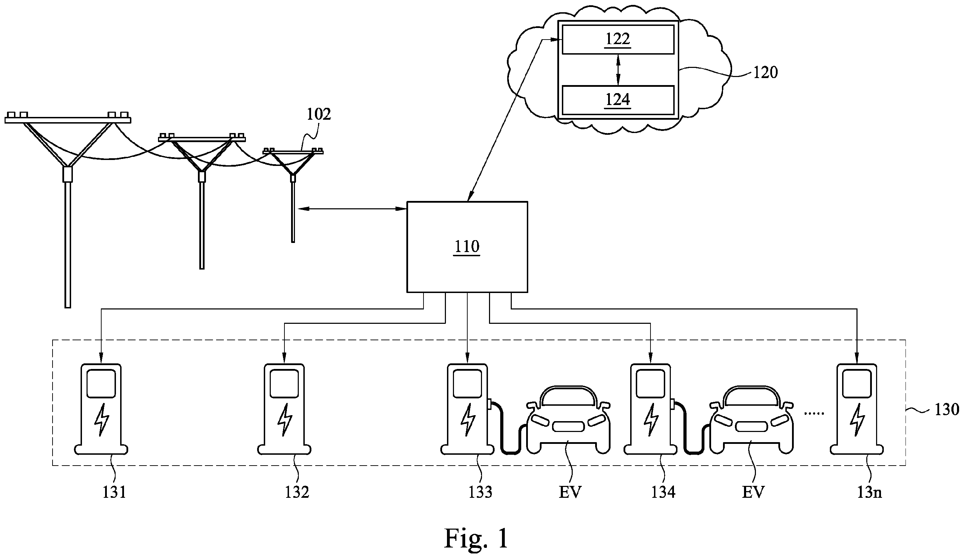

Reference is made to Fig. 1. Fig. 1 is a schematic diagram illustrating charging facilities according to some embodiments of the present disclosure. As shown Fig. 1, one or more power distribution units 110 are electrically connected to charging points 131~13n and a power grid 102. In some embodiments, the power distribution units 110 are configured to convert and transmit the power supplied from the power grid 102 to the charging points 131~13n. In some embodiments, the power distribution units 110 and the charging points 131~13n can be considered as split type charging points. In some embodiments, the power distribution units 110 obtain information of the total power supplied from the power grid 102 to the charging hub 130, and the power distribution units 110 obtains an available power by subtracting the transmission loss from the total power. In some embodiments, each of the power distribution units 110 can include one or more current regulators and one or more power converters for adjusting the supply voltage and current supplied to each of the charging points 131~13n, in order to control and adjust the charging power assigned to each charging points 131~13n. In the other embodiments, the power distribution units 110 and the charging points 131~13n can be implemented by integrated type charging points instead of split type charging points in the embodiment of Fig. 1, which means that the power distribution units 110 are integrated with the charging points 131~13n, and the power distribution units 110 are configured to adjust and control the charging power assigned to each of the charging points 131~13n.

In some embodiments, the charging points 131~13n are disposed in the charging hub 130. In some embodiments, the amount of the available power supplied to the charging points 131~13n in the charging hub 130 may be limited by the contract signed with the energy supplier. In certain cases, if the available power supplied to the charging points 131~13n is less than a total desired power, the charging management system 120 can determine at least one of algorithms according to a distribution strategy of the charging hub 130 to allocate the available power to the charging points 131~13n.

In some embodiments, a charging management system 120 are communication connected with the power distribution unit 110 and/or the charging points 131~13n. In some embodiments, the communication transmission between the charging management system 120 and the charging points 131~13n conforms to open charge point protocol. In some embodiments, the charging management system 120 can be implemented by a server, which includes a processor 122 and a memory device 124 electrically connected to the processor 122. In some embodiments, the processor 122 is communication connected with the power distribution unit 110 and/or the charging points 131~13n.

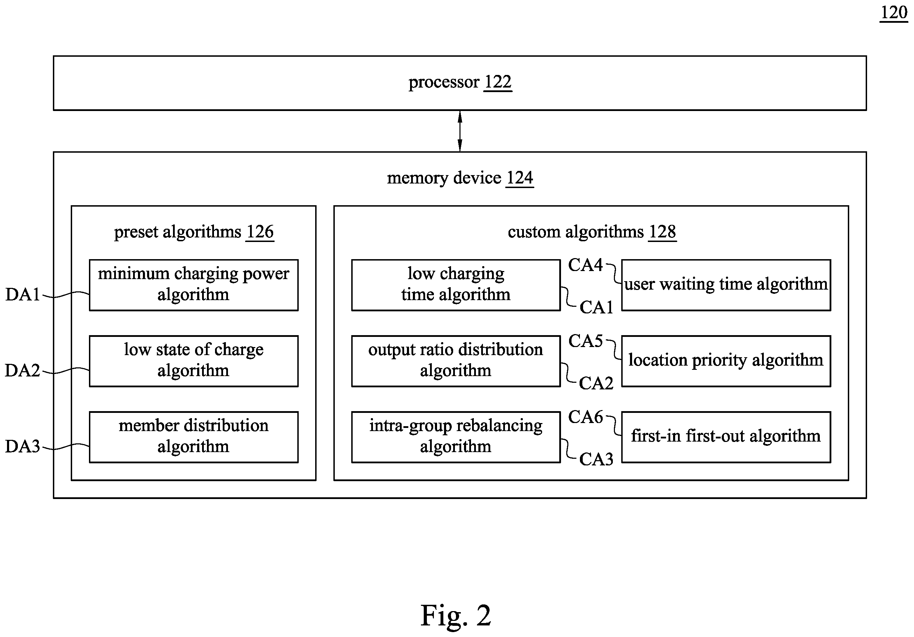

Reference is made to Fig. 1 and Fig. 2. Fig. 2 is a schematic diagram illustrating a charging management system 120 according to some embodiments of the present disclosure. As shown in Fig. 2, the charging management system 120 includes a processor 122 and a memory device 124. In some embodiments, the processor 122 can be implemented by a central processing unit, a microprocessor, a field-programmable gate array integrated circuit (FPGA), an application specific integrated circuit (ASIC), or other devices suitable for extracting or executes instructions and access data stored in the memory 124. In some embodiments, the memory device 124 can be implemented by electrical, magnetic, optical memory devices or other storage devices which can store the said instructions or data. In some embodiments, the memory 124 can be implemented by volatile memory or non-volatile the memory. In some embodiments, the memory 124 can be random access memory (RAM), dynamic random access memory (DRAM), magnetoresistive random access memory (MRAM), phase-change random access memory (PCRAM) or other storage devices. In some embodiments, the processor 122 executes instructions and access data stored in the memory 124 to control the power allocation among charging points 131~13n included in the charging hub 130. The memory device 124 is configured to store preset algorithms 126 and custom algorithms 128. In some embodiments, the processor 122 selects and executes at least one of the preset algorithms 126 and at least one of the custom algorithms 128 according to a target distribution strategy, in order to flexibly comply with the various requirements of different charging hubs. In some embodiments, the processor 122 determines the target distribution strategy according to the at least one of characteristics of the charging hub 130. In some embodiments, the processor 122 controls a power allocation among charging points 131~13n included in the charging hub 130 according to the at least one of the preset algorithms 126 and at least one of the custom algorithms 128, in which an execution of at least one of the preset algorithms 126 is prior than an execution of at least one of the custom algorithms 128 among in the power allocation, and the charging points 131~13n are configured to charge electrical vehicles EV according to the power allocation. In some embodiments, the preset algorithms are general algorithms, and the custom algorithms are specific algorithms.

In some embodiments, the preset algorithms 126 include a minimum charging power algorithm DA1, a low state of charge algorithm DA2 and a member distribution algorithm DA3.

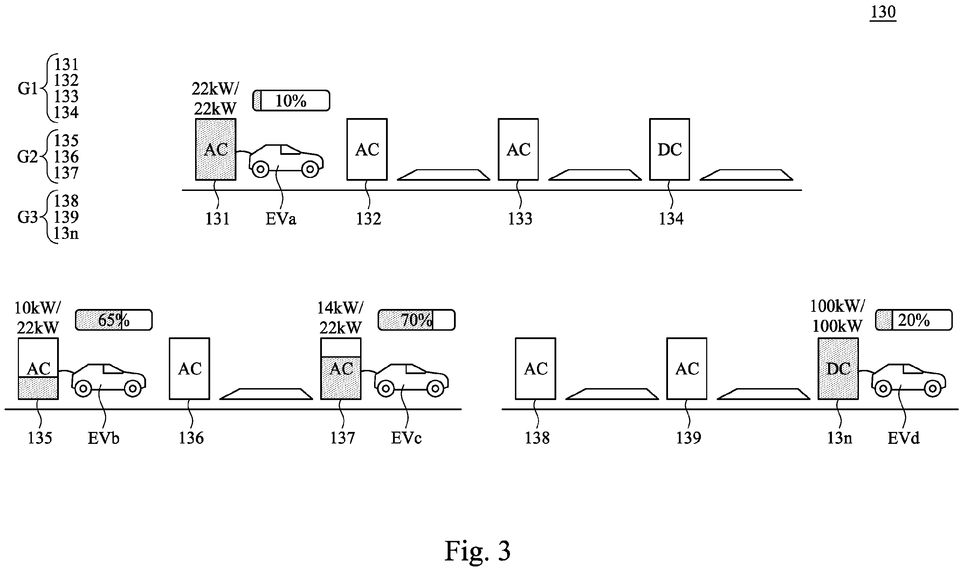

In some embodiments, the minimum charging power algorithm DA1 is to confirm the specifications (such as, a maximum charging power/an upper power limit and a minimum charging power/a lower power limit) of the charging guns of the charging points (such as, the charging point 131 as shown in Fig. 3) to charge electrical vehicles EV with charging requirements within the group, so as to respectively allocate the lower power limit of each charging guns of the charging points to these charging points to charge the electrical vehicles EV.

In some embodiments, the low state of charge algorithm DA2 is to determine the state of charge of each electrical vehicles with charging requirements less than a threshold (such as, 30%) as a low SOC, and to give the maximum charging power to certain DC charging points to charge the electrical vehicles with low SOC. For better understanding the low state of charge algorithm DA2, reference is made to Fig. 1 to Fig. 3. Fig. 3 is a schematic diagram illustrating a scene under a low state of charge algorithm DA2 according to some embodiments of the present disclosure. As shown in Fig. 3, the charging hub 130 is configured with charging points 131~13n. The charging points 131, 135, 137 and 13n provide the charging serves for the electrical vehicles EVa~EVd. The charging points 131, 135, 137 and 13n respectively connected to the EVa~EVd and receive the battery state of charge of the electrical vehicles EVa~EVd. For example, the current state of charge of the electrical vehicle Eva is 10%, and the current state of charge of the electrical vehicle EVb is 65%, the charging points 131, 135, 137 and 13n transmit the information of the state of charge of each electrical vehicles EVa~EVd back to the power distribution unit 110 and the charging management system 120. In certain case, if the state of charge of each electrical vehicles EVa and EVd is less than a preset value (such as, 30%), the charging management system 120 assigns the maximum charging power (such as, the upper power limit of each charging points 131 and 13n) to each charging points 131 and 13n to charge the electrical vehicles EVa and EVd while the remaining power is enough.

In some embodiments, the charging points 131~13n included in the charging hub 130 can be grouped into serval clusters to set the priority according to the service plan. For example, the charging hub 130 includes three charging point clusters G1~G3. The charging point cluster G1 includes charging points 131~134. The charging point cluster G2 includes charging points 135~137, and the charging point cluster G3 includes charging points 138~13n. In some embodiments, the charging points 131~13n can be grouped into serval clusters according to the locations of the charging points 131~13n. For example, the charging points 131~134 are located in a first area, the charging points 135~137 are located in a second area, and the charging points 138~13n are located in a third area.

In some embodiments, the member distribution algorithm DA3 includes that a weight given to an electrical vehicle with membership is different from a weight given to an electrical vehicle without membership, and the calculation of the member distribution algorithm DA3 is to calculates the total weight by utilizing the specifications of the charging guns of the charging points, which can be expressed by the following formula.

$$Ratio_i = \frac{CUS_i * Ratio_{sel}}{CUS_{non\,VIP} * Ratio_{non\,VIP} + CUS_{VIP} * Ratio_{VIP}}$$

$$Assigned\ Power_{VIPi} = Remaining\ Power * Ratio_i$$

In the above formula, $CUS_i$ refers to an upper power limit of a charging gun of a charging point. $CUS_{non\,VIP}$ refers to a sum of the upper power limit of charging guns the charging points for charging the electrical vehicles without the membership. $CUS_{VIP}$ refers to a sum of the upper power limit of charging guns of the charging points for charging the electrical vehicles with the membership. $Ratio_{non\,VIP}$ refers to a preset weight of the charging points for charging the electrical vehicles without the membership. $Ratio_{VIP}$ refers to a preset weight of the charging points for charging the electrical vehicles with the membership. In some embodiments, the $Ratio_{non\,VIP}$ can be set at 30%, and $Ratio_{VIP}$ can be set at 70%.

In some embodiments, if the i-th charging point is used by an electrical vehicle with membership, $Ratio_{sel}$ is substituted by $Ratio_{VIP}$. That is, $Ratio_i$ refers to a weight ratio calculated for the i-th charging point used by an electrical vehicle with the membership. On the other hand, if the i-th charging point is used by an electrical vehicle without the membership, $Ratio_{sel}$ is substituted by $Ratio_{non\,VIP}$. That is, $Ratio_i$ refers to a weight ratio calculated for the i-th charging point used by an electrical vehicle without the membership. In some embodiments, $Remaining\ Power$ refers to a remaining available power at the current stage. In some embodiments, $Assigned\ Power_{VIPi}$ refers to the power assigned to the i-th charging point among the member distribution algorithm DA3.

In some embodiments, the custom algorithms 128 includes a low charging time algorithm CA1, an output ratio distribution algorithm CA2, an intra-group rebalancing algorithm CA3, a user waiting time algorithm CA4, a location priority algorithm CA5 and a first-in first-out algorithm CA6.

In some embodiments, the low charging time algorithm CA1 is to calculate the priority scores of the DC charging points providing the charging serves in the charging hub, and to give the maximum charging power to the corresponding charging points according to the priority scores until a preset allocation proportion of the remaining power is used up, the low charging time algorithm CA1 can be expressed by the following formula.

$$Score_i = \ battery\ capacity(kWh) \times charging\ interval\ /\ Connector\ Upper\ Spec_i$$

In above formula, $Score_i$ refers to a priority score of the i-th charging point, the calculation of the $Score_i$ is to divide a product of battery capacity and a charging interval of the electrical vehicle charged by the i-th charging point by a upper power limit of a charging gun of the i-th charging point. The said charging interval refers to a difference (such as, 20%) between a full charged capacity (such as, 100%) and a current capacity (such as, 80%) of the battery of the electrical vehicle. In some embodiments, priority scores of all the charging points included in the charging hub 130 can be calculated by the above said manner, the lower the priority score $Score_i$, the shorter the charging time of the electrical vehicle to be fully charged. The priority scores of all charging points included in the charging hub 130 is sort from smallest to largest, and the charging points ranked in the top (with the lower priority score $Score_i$) are given with the maximum charging power. In the other embodiments, an allocation proportion of the available power and the number of the charging points are given with the power at this stage can be set, so as to execute the low charging time algorithm CA1 according to the preset parameters and the priority scores of the charging points.

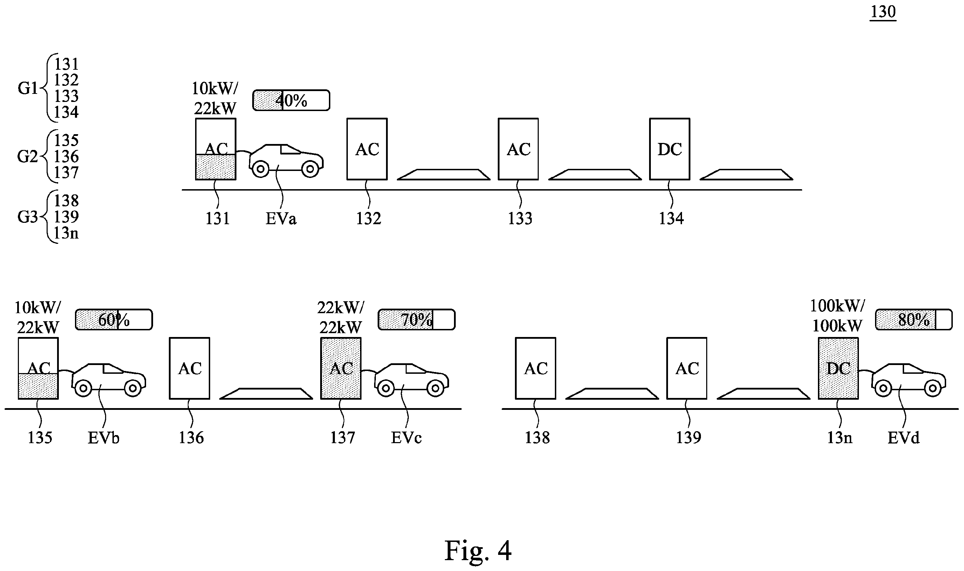

For better understanding the low charging time algorithm CA1, reference is made to Fig. 1, Fig. 2, and fig. 4. Fig. 4 is a schematic diagram illustrating a scene under a low charging time algorithm CA1 according to some embodiments of the present disclosure. As shown in Fig. 4, the charging hub 130 is configured with charging points 131~13n. The charging points 131, 135, 137 and 13n provides the charging serves for the electrical vehicles EVa~EVd. The charging points 131, 135, 137 and 13n receive the battery state of charge of each electrical vehicles EVa~EVd. For example, the battery state of charge of electrical vehicles EVa~EVd respectively are 40%, 60%, 70% and 80%. The charging management system 120 calculates the priority scores of all charging points 131~13n included in the charging hub 130 based on the low charging time algorithm CA1. The battery capacity of each electrical vehicle EVa~EVd is supposed to be 100 kWh, and a full charged capacity is set at 85%, the priority score of the charging point 137 providing charging serve to the electrical vehicle EVc can be calculated as 100*(0.85-0.70)/22 kW=0.68. The priority score of the charging point 13n providing charging serve to the electrical vehicle EVd can be calculated as 100*(0.85-0.80)/100 kW=0.05. The priority scores of the charging points 131 and 135 providing charging serves to the electrical vehicles EVa and EVb are respectively 2.05 and 1.14. Therefore, the aforementioned priority scores are sorted from smallest to the largest, and the charging points ranked in top are given priority for the power distribution. In some embodiments, the charging points 13n and 137 ranked in top two are given with the maximum charging power or the upper power limit of the specification of the charging points 13n and 137 according to the low charging time algorithm CA1. In the other embodiments, a ratio of the available power and the number of the electrical vehicles to be assigned at this stage can be set. For example, the electrical vehicles ranked in top two are given with 50% remaining power, the charging point 13n is firstly given with the maximum charging power, and then the charging point 137 is given with the maximum charging power until the 50% remaining power is used up.

In some embodiments, the output ratio distribution algorithm CA2 is to allocate a remaining amount of available power to the charging point within the group. The output ratio distribution algorithm CA2 is to allocate the remaining amount of available power according to the weights of the charging guns of the charging points included in the charging hub, the power assigned to a charging point is a product of the remaining amount of available power and the weight of the charging gun of the charging point. In some embodiments, the power distribution based on the output ratio distribution algorithm CA2 is executed until the remaining amount of available power equal to 0 or the root group limit achieve an upper limit. In some embodiments, the weight of the output ratio distribution algorithm CA2 can be expressed by the following formula.

$$Weight_i = \frac{Connector\ Upper\ Spec_i - Assigned\ Power_{lasti}}{Sum(Connector\ Upper\ Spec_{online} - Assigned\ Power_{last\ online})}$$

In above formula, *Connector Upper Spec$_i$* refers to upper power limit of a charging gun of the i-th charging point, and *Assigned Power$_{lasti}$* refers to the power which has been assigned to the i-th charging point at previous stages. *Connector Upper Spec$_{online}$* refers to the upper power limit of the charging guns of the charging points being used, and *Assigned Power$_{lastonline}$* refer to the power which has been assigned to the charging points at previous stages.

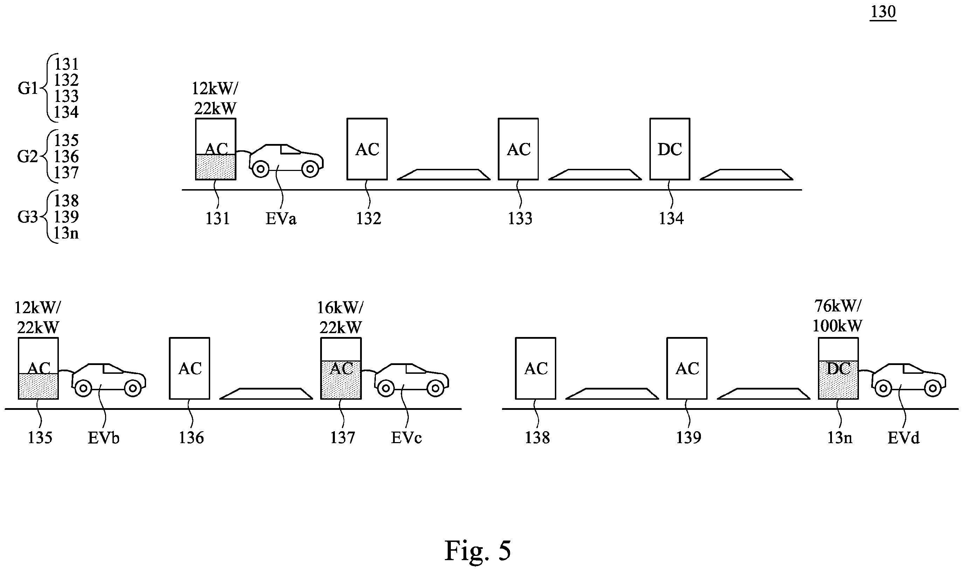

For better understanding the output ratio distribution algorithm CA2. Reference is made to Fig. 1, Fig. 1, Fig. 2 and Fig. 5. Fig. 5 is a schematic diagram illustrating a scene under an output ratio distribution algorithm CA2 according to some embodiments of the present disclosure. As shown in Fig. 5, a remaining charging ability of the charging point 131 is 22-12=10. A, the remaining charging abilities of the charging points 135, 137 and 13n are respectively 10, 6 and 24. A weight of the charging point 131 is 10/(10+10+6+24)=0.2. The current remaining power of the charging hub 130 is supposed to be 20 kW, the power assigned to the charging point 131 is 20*0.2=4 kW according to the output ratio distribution algorithm CA2. That is, the output power of the charging point 131 changes from the 12 kW to the 16 kW.

In some embodiments, the intra-group rebalancing algorithm CA3 is to reallocate the power which has been assigned to the charging points being used within the group. The power reallocated to the i-th charging point based on the intra-group rebalancing algorithm CA3 can be expressed as the following formulas.

$$Weight_i = \frac{Connector\ Spec_i}{Sum(Connector\ Upper\ Spec_{online})}$$

$$Reassigned\ Power_{Group_k} = Sum(Assigned\ Power_i - Connector\ Lower\ Spec_i)$$

$$Reassigned\ Power_i = Connector\ Lower\ Spec_i + Reassigned\ Power_{Group_k} * Weight_i$$

In the above formula, Sum(*Connector Upper Spec$_{online}$*) refers a sum of upper power limit of charging guns of the charging points being used, and *Connector Spec$_i$* refer to an upper power limit of a charging gun of the i-th charging point. In some embodiments, *Weight$_i$* refers to a weight for the i-th charging point based on the intra-group rebalancing algorithm CA3. In some embodiments, *Assigned* Power$_i$ refers to assigned power of the i-th charging point included in the k-th group, and *Connector Lower Spec$_i$* refers to the lower power limit of the i-th charging point included in the k-th group. In some embodiments, *Reassigned Power$_{Group_k}$* refers to the power availably assigned to the k-th group. In some embodiments, *Reassigned Power$_i$* is the power reassigned to the i-th charging point based on the intra-group rebalancing algorithm CA3.

In some embodiments, the user waiting time algorithm CA4 is to perform the adjustment distribution based on time length of the user waiting time, in order to minimize the user waiting time. The calculation of the user waiting time algorithm CA4 is based on a preset charging time threshold (such as, 20 minutes) and an allocation proportion (such as, 65%) of the remaining power. The user waiting time algorithm CA4 includes the following points. (i) Performing the calculation of charging time of each electrical vehicle, and when a charging time of an electrical vehicle exceeds the preset charging time threshold, the charging point for charging the electrical vehicle is involved to the control scope of the user waiting time algorithm CA4. (ii) Sorting the involved charging points from a longest charging time to a shortest charging time. That is, the longer the charging time, the higher the priority. (iii) Giving the involved charging points with the maximum charging power (such as, the upper power limit) according to the priority, until the allocation proportion of the remaining power is used up.

In some embodiments, the location distribution algorithm CA5 is to perform priority distribution based on locations of the charging points. Specifically, the priority scores of the charging points at each location and assigned weight parameters are preset, in which the assigned weight parameters means the output proportion of the upper power limit of the charging gun that can be allocated in the first round. For example, if the assigned weight is 80%, the maximum output of a charging point is 80% of the upper power limit of the charging gun of the charging point. The distribution based on the location priority algorithm CA5 includes two rounds. (i) The assigned weights of the charging points are calculated according to the location priorities, and a remaining power is assigned to the charging points according to the assigned weights, in which the charging points with the same priority have the same assigned weight. (ii) If there is a residual power left after the distribution of the first round, a second round is performed to allocate the residual power to the charging points backward from highest priority, and there is no restriction on the allocation proportion at the second round.

In some embodiments, the first-in first-out algorithm CA6 is to perform priority distribution based on the charging start time of each electric vehicle. Specifically, the assigned weight which refers to the output proportion of the upper power limit of the charging gun that can be allocated in the first round can be preset. The distribution based on the first-in first-out algorithm CA6 includes two rounds. (i) The assigned weights of the charging points are calculated according to the charging start time of each electric vehicle, and a remaining power is assigned to the charging points according to the assigned weights. (ii) If there is a residual power left after the distribution of the first round, a second round is performed to allocate the residual power to the charging points backward from highest priority, and there is no restriction on the allocation proportion at the second round.

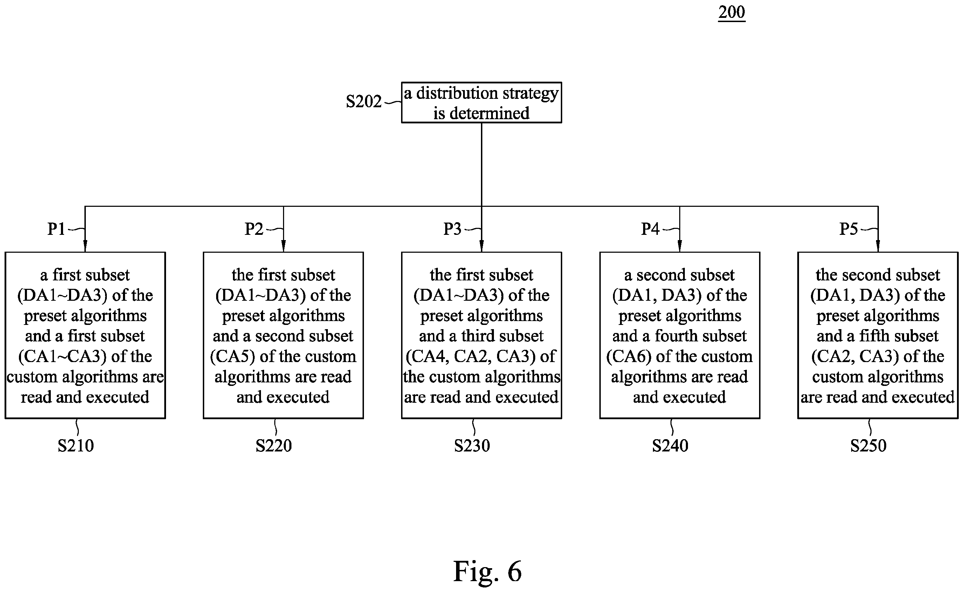

Reference is made to Fig. 6. Fig. 6 is a schematic diagram illustrating a charging management method 200 according to some embodiments of the present disclosure. As shown in Fig. 6, the charging management method 200 includes steps S202, S210, S220, S230, S240 and S250. Steps S202 and S210~S250 of the charging management method 200 can be performed by the processor 122. In some embodiments, the charging management method 200 can be performed by an electronic device at the charging site, which is not intended to limit the present disclosure.

In step S202, a distribution strategy is determined. In some embodiments, the processor 122 selects a target distribution strategy from multiple distribution strategies P1~P5 according to at least one of characteristics of the charging hub 130, and the processor 122 further determines the at least one of the preset algorithms 126 and at least one of the custom algorithms 128 according to the target distribution strategy. In some embodiments, the at least one of characteristics of the charging hub 130 includes a classification of management of the charging hub 130 and a location of the charging hub 130. In some embodiments, the classification of management of the charging hub is an electric vehicle charge point operator or an electric vehicle fleet operator. In some embodiments, the charging hub is located at a parking level of a mall building or an office building. In some embodiments, the distribution strategy is selected from a distribution strategy for high turn-over rate P1, a distribution strategy for location priority P2, a distribution strategy for user experience priority P3, a distribution strategy for entry order priority P4 and a fair distribution strategy P5 according to the . In some embodiments, if the classification of management of the charging hub 130 is the electric vehicle charge point operator, the processor 122 determines the distribution strategy for user experience priority P3 as the target distribution strategy. In some embodiments, if the classification of management of the charging hub 130 is the electric vehicle fleet operator, the processor 122 determines the distribution strategy for entry order priority P4 as the target distribution strategy. In some embodiments, if the charging hub 130 is located at a parking level of an official building, the processor 122 determines the distribution strategy for high turn-over rate P1 as the target distribution strategy. In some embodiments, if the charging hub 130 is located at a parking level of mall building, the processor 122 determines the fair distribution strategy P5 as the target distribution strategy. The aforementioned characteristics of the charging hub 130 are only exemplary examples; the present disclosure is not limited thereto.

In some embodiments, the distribution strategy is determined according to a location of the charging hub 130. For example, the charging hub 130 can be located at a parking garage in a shopping mall or office building or a parking lot managed by an operator or fleet. In certain cases, one of a distribution strategy for high turn-over rate P1, a distribution strategy for location priority P2, a distribution strategy for user experience priority P3, a distribution strategy for entry order priority P4 and a fair distribution strategy P5 is determined as the distribution strategy according to a characteristic of the charging hub 130.

In some embodiments, the distribution strategy for high turn-over rate P1 refers to a strategy to consider two situations of low state of charge and short charging time, it gives higher priority on power distribution for the said two situations, and the electrical vehicles at low state of charge are charged by the maximum charging power of the charging points if the available power is enough, such that the electrical vehicles at a low state of charge can be quickly charged to reach a certain battery level, in order to reduce the time that the battery of the electrical vehicle being in the low state of charge. As such, the lifespan of the battery can be extended and the user experience can be improved. Further, electric vehicles that are expected to be fully charged within a short time can be charged as soon as possible, so as to reduce the time staying at the charging hub 130, and to increase the turn-over rate of the charging hub 130. If the distribution strategy for high turn-over rate P1 is determined as the target distribution strategy in step S202, the step S210 is performed to read and execute a first subset (DA1~DA3) of the preset algorithms 126 and a first subset (CA1~CA3) of the custom algorithms 128. In some embodiments, the first subset of the custom algorithms 128 includes a low charging time algorithm CA1, an output ratio distribution algorithm CA2 and an intra-group rebalancing algorithm CA3 configured to be executed in order.

In some embodiments, the distribution strategy for location priority P2 is to assign more charging resources to the parking spaces at specific locations, so as to provide better serve to the electrical vehicles which are charged at these specific locations. If the distribution strategy for location priority P2 is determined as the target distribution strategy in step S202, the step S220 is performed to read and executed the first subset (DA1~DA3) of the preset algorithms 126 and a second subset (CA5) of the custom algorithms 128. In some embodiments, the second subset of the custom algorithms 128 includes a location priority algorithm CA5.

In some embodiments, the distribution strategy for user experience priority P3 is to minimize the waiting time to improve the user experience. If the distribution strategy for user experience priority P3 is determined as the target distribution strategy in step S202, step S230 is performed to read and execute the first subset (DA1~DA3) of the preset algorithms 126 and a third subset (CA4, CA2, CA3) of the custom algorithms 128. In some embodiments, the third subset of the custom algorithms 128 include a user waiting time algorithm CA4, an output ratio distribution algorithm CA2 and an intra-group rebalancing algorithm CA3 configured to be executed in order.

In some embodiments, each steps S201~S230 includes the execution of the first subset of the preset algorithms 126. In some embodiments, the first subset of the preset algorithms 126 includes a minimum charging power algorithm DA1. In some embodiments, the first subset of the preset algorithms 126 includes at least of the minimum charging power algorithm DA1, a low state of charge algorithm DA2 and a member distribution algorithm DA3. In some embodiments, the first subset of the preset algorithms 126 includes the minimum charging power algorithm DA1, the low state of charge algorithm DA2 and the member distribution algorithm DA3 configured to be executed in order. The first subset of the preset algorithms 126 is to ensure that all of the electrical vehicles which have the charging requirement in the charging hub are able to be powered by the charging points. In some embodiments, steps S210~S230 respectively include the executions of first to third subsets of the custom algorithms 128. The first to third subsets of the custom algorithms 128 can better match the power management requirements of different charging hubs.

In some embodiments, the distribution strategy for entry order priority P4 is a first-in first-out distribution method. If the distribution strategy for entry order priority P4 is determined as the target distribution strategy in step S202, step S240 is performed to read and execute a second subset (DA1, DA3) of the preset algorithms 126 and a fourth subset (CA6) of the custom algorithms 128. In some embodiments, the fourth subset of the custom algorithms 128 includes a first-in first-out algorithm CA6.

In some embodiments, the fair distribution strategy P5 is to ensure the charging points that are charging electrical vehicles can be given with the minimum charging power, and to rebalance the assigned power in the intra-group. If the fair distribution strategy P5 is determined as the target distribution strategy in step S202, step S250 is performed to read and execute the second subset (DA1, DA3) of the preset algorithms 126 and a fifth subset (CA2, CA3) of the custom algorithms 128. In some embodiments, the fifth subset of the custom algorithms 128 includes an output ratio distribution algorithm CA2 and an intra-group rebalancing algorithm CA3 configured to be execution in order.

In some embodiments, each of step S240 for the entry order priority strategy P4 and step S250 for the fair distribution strategy P5 includes the execution of the second subset of the preset algorithms 126. In some embodiments, the second subset of the preset algorithms 126 includes the minimum charging power algorithm DA1. In some embodiments, the second subset of the preset algorithms 126 includes at least one of the minimum charging power algorithm DA1 and the member distribution algorithm DA3. In some embodiments, the second subset of the preset algorithms 126 includes the minimum charging power algorithm DA1 and the member distribution algorithm DA3 configured to be executed in order. In some embodiments, the second subset of the preset algorithms 126 is not equal to the first subset of the preset algorithms 126. In some embodiments, the second subset of the preset algorithms 126 is to ensure that all of the electrical vehicles which have the charging requirement in the charging hub are able to be powered by the charging points. In some embodiments, steps S240~S250 respectively include the fourth subset of the custom algorithms 128 and the fifth subset of the custom algorithms 128. The fourth to fifth subsets of the custom algorithms 128 can better match the several energy management requirements for the different charging hubs.

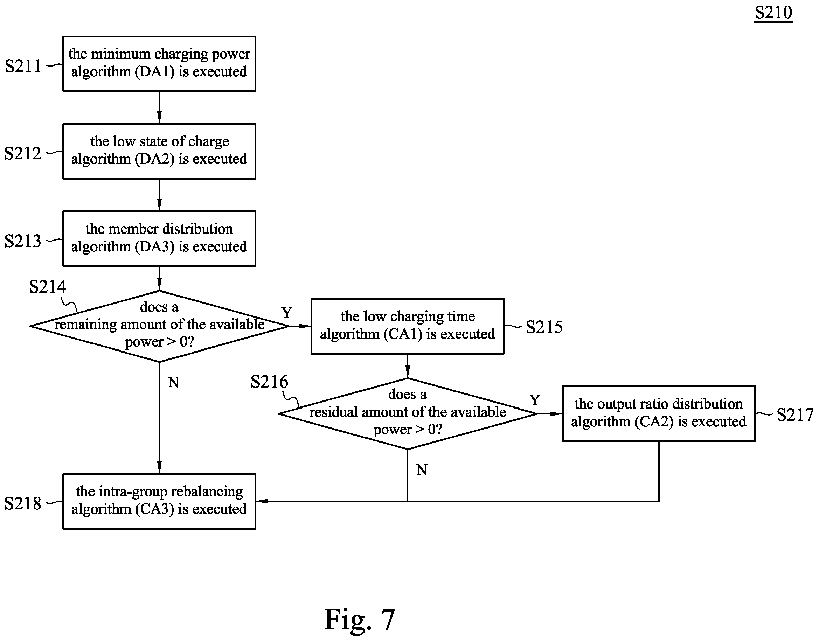

Reference is made to Fig. 7. Fig. 7 is a schematic diagram illustrating step S210 of the charging management method in Fig. 6 according to some embodiments of the present disclosure. As shown in Fig. 7, step S210 includes steps S211~S218. In some embodiments, steps S211~S218 can be performed by the processor 122 of the charging management system 120. In the other embodiments, steps S211~S218 can be performed by an electronic device setup at the site, which is not intended to limit the present disclosure.

EP 4 521 582 A1

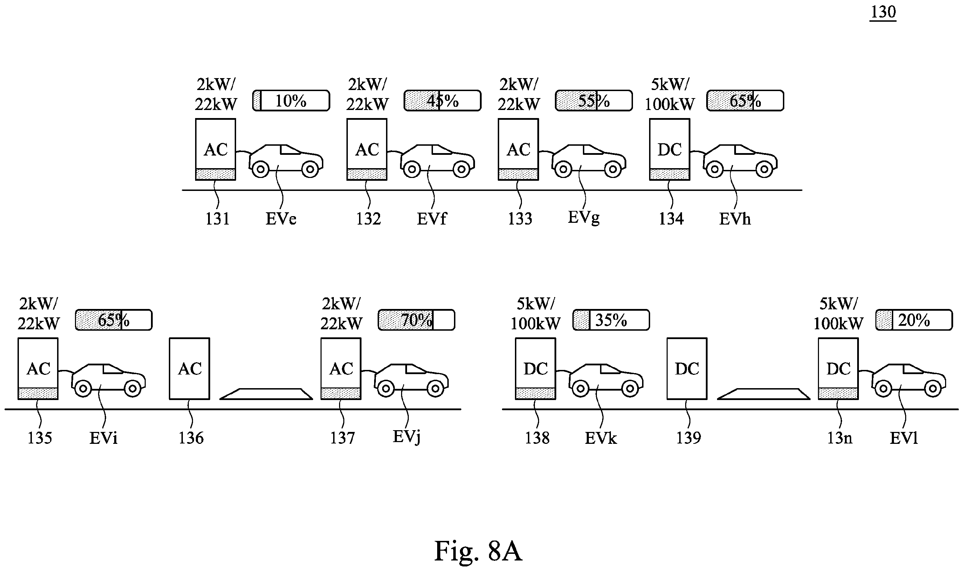

In step S211, the minimum charging power algorithm DA1 is executed. For better understanding, reference is made to Fig. 8A. Fig. 8A is a schematic diagram illustrating a scene under an execution of a minimum charging power algorithm DA1 according to some embodiments of the present disclosure. As shown in Fig. 8A, if the available power of the charging hub 130 is 300 kW, and the lower power limit of each charging points 131~134, 135, 137, 138 and 13n are respectively 2 kW, 2 kW, 2 kW, 5 kW, 2 kW, 2kW, 5 kW and 5 kW. The charging management system 120 respectively allocates the above said lower power limit of 2 kW, 2 kW, 2 kW, 5 kW, 2 kW, 2kW, 5 kW and 5 kWto the charging points 131~134 being used. Meanwhile, the remaining power of the charging hub 130 is 275 kW.

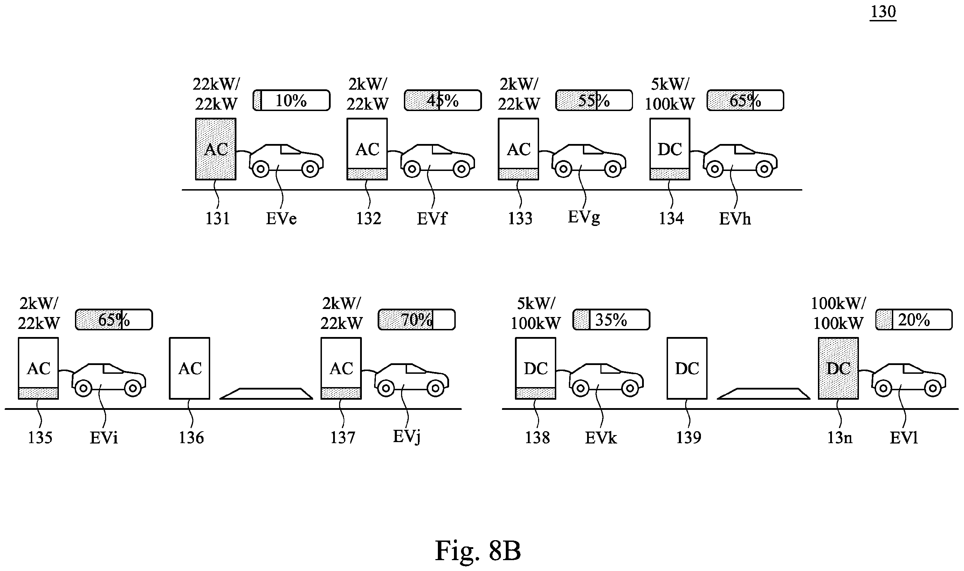

In step S212, the low state of charge algorithm DA2 is executed. For better understanding, reference is made to Fig. 8B. Fig. 8B is a schematic diagram illustrating a scene under an execution of a low state of charge algorithm DA2 according to some embodiments of the present disclosure. As shown in Fig. 8B, the remaining power could be allocated at this stage is supposed to be 275 kW, and whether the battery state of charge of each electrical vehicles EVe~EVi being charged is less than a threshold (such as, 30%) is determined. If the battery state of charge of each electrical vehicles EVe and EVi is less than the threshold, the output power of the charging points 131 and 13n being used by the electrical vehicles EVe and EVi are set to be the maximum charging power thereof (such as, 22 kW and 100 kW). Meanwhile, when the execution of step S212 is completely, the remaining power of the charging hub 130 is 275-(22-2)-(100-5) kW=160 kW.

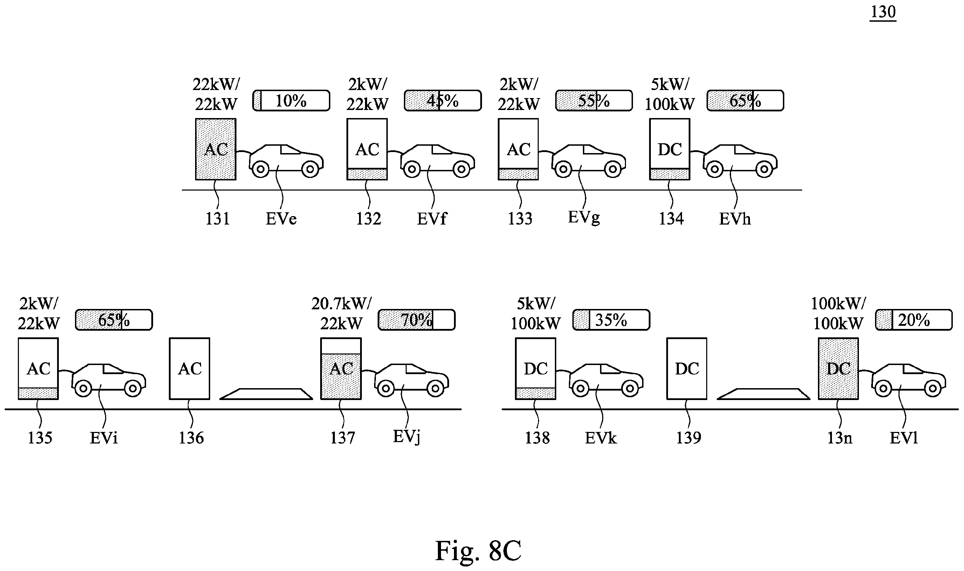

In step S213, the member distribution algorithm DA3 is executed. For better understanding, reference is made to Fig. 8C. Fig. 8C is a schematic diagram illustrating a scene under an execution of a member distribution algorithm DA4 according to some embodiments of the present disclosure. As shown in Fig. 8C, the remaining power could be allocated at this stage is supposed to be 160 kW, and the power distribution at this stage is based on whether the electrical vehicles EVe~EVi have the membership status.

In some embodiments, a weight of a charging point used by the electrical vehicle with membership is set at 70%, a weight of the other charging point used by the electrical vehicle without membership is set at 30%. For example, if the electrical vehicle EVj has the membership, the distribution weight of the charging point 137 at this stage can be calculated as 22*0.7/[(22*4+100*3)*0.3+22*0.7]=0.117 on the basis of the aforementioned formula of the member distribution algorithm DA4. And, the power assigned to the charging point 137 at this stage is a product of the distribution weight and the remaining power (such as 160 kW* 0.117=18.7 kW). Among steps S211~S213, charging power assigned to the charging point 137 is 2 kW+18.7kW=20.7 kW. Meanwhile, when the execution of step S213 is completely, the remaining power of the charging hub 130 is 160-18.7 kW=141.3 kW.

In step S214, whether the remaining power is greater than 0 is determined. In some embodiments, the processor 122 calculates and allocates a partial amount of the available power to the charging point 131~13n by performing steps S211~S213. In some embodiments, the processor 122 subtracts the partial amount of the available power from the available power to calculate a remaining power. In some embodiments, if the remaining power is greater than 0, the processor 122 then performs step S215.

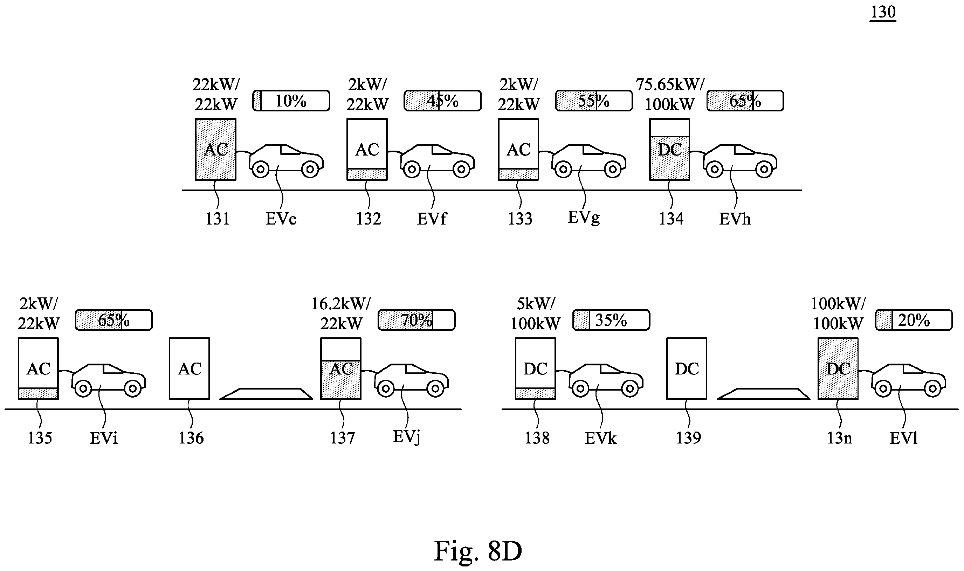

In step S215, the low charging time algorithm CA1 is executed. For better understanding, reference is made to Fig. 8D. Fig. 8D is a schematic diagram illustrating a scene under an execution of a low charging time algorithm CA1 according to some embodiments of the present disclosure. As shown in Fig. 8D, when the execution of step S213 is completed, the remaining power of the charging hub 130 is 141.3 kW, and a proportion of the remaining power is set at 50% that could be allocated at this stage. For example, the power could be allocated at this stage is 141.3*0.5 kW=75.65 kW. The low charging time algorithm CA1 is to calculate the power assigned to the DC charging points. In some embodiments, the charging points 134, 138 and 13n are DC charging points, in which the charging point 13n is given with the upper power limit, so that the consideration for distributing power to the charging point 13n at this stage can be omitted. If the battery capacity of each electrical vehicles EVh and EVk charged by the charging points 134 and 138 is 100 kWh, and a fully charging capacity is set at 85%. A priority score of the charging point 134 is 100*(0.85-0.65)/100=0.2. A priority score of the charging point 138 is 100*(0.85-0.35)/100=0.5. The priority scores are sorted from the minimum to the maximum, the charging point 134 ranked in the top order is given with assigned power of 75.65 kW. Meanwhile, when the execution of step S215 is completed, the remaining power of the charging hub 130 is 141.3-75.65 kW=75.65 kW.

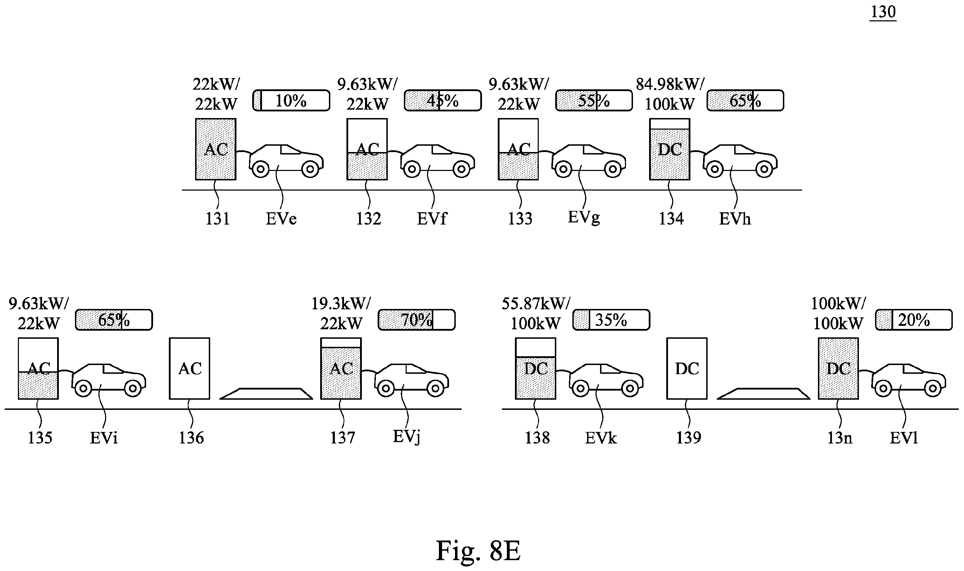

In step S216, whether the remaining power is greater than 0 is determined. In some embodiments, the processor 122 calculates and allocates a partial amount of the remaining power to the charging points 131~13n by executing steps S211~S215. In some embodiments, the processor 122 derives a residual amount of the available power by subtracting the partial amount of the available power from the available power. In some embodiments, if the residual amount of the available power is greater than 0, the processor 122 then performs step S217; if the residual amount of the available power is equal to 0, the processor 122 then performs step S218. In step S217, the output ratio distribution algorithm CA2 is to allocate the residual amount of the available power to the charging points 131~13n. For better understanding, reference is made to Fig. 8E. Fig. 8E is a schematic diagram illustrating a scene under an execution of an output ratio distribution algorithm CA2 according to some embodiments of the present disclosure. As shown in Fig. 8E, if the residual amount of the available power could be allocated at this stage is 70.65 kW. The remaining charging ability of the charging points 132 is 22 kW-2 kW=20 kW. Accordingly, the remaining charging abilities of the charging points 133~135 and 137~138 are respectively 20 kW, 24.35 kW, 20 kW, 5.8 kW and 95 kW. The weight of each of the charging points 132~133 and 135 is equal to 20/(20*3+24.35+5.8+95)=0.108, and the weight of the charging point 134 is equal to 24.35/(20*3+24.35+5.8+95)=0.132. The weights of the charging points 137~138 are respectively 0.044 and 0.72. Each of the charging points 132~133 and 135 is given with (2 kW+70.65 kW*0.108) kW=9.63 kW at this stage. The charging point 133 is given with (75.65 kW+70.65 kW*0.132) kW=84.98 kW at this stage. The charging points 137~138 are respectively given with 19.3 kW and 55.87 kW at this stage. Meanwhile, the available power of the charging hub 130 is fully allocated to the charging points 131~13n.

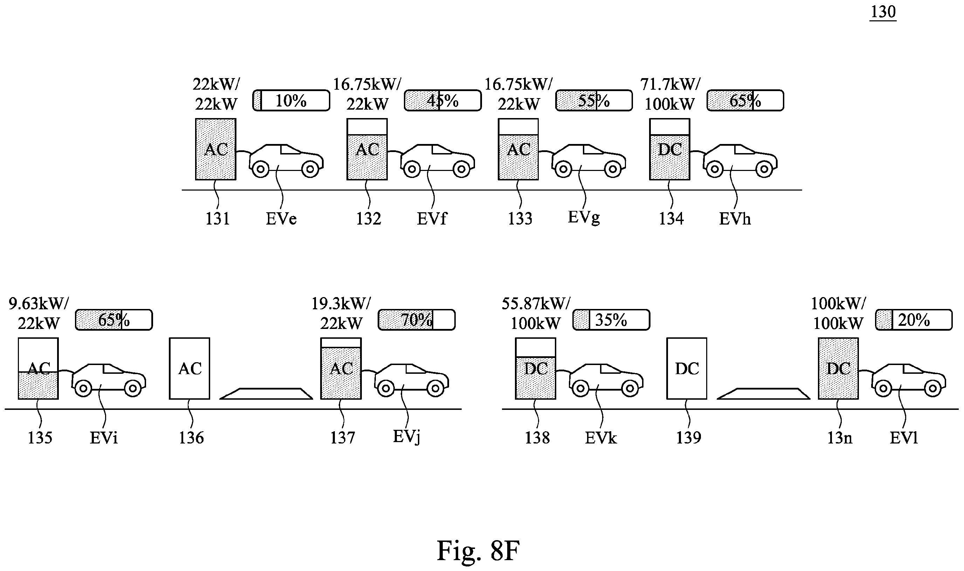

In step S218, intra-group rebalancing algorithm CA3 is executed to reallocate the assigned power within the group. In some embodiments, the intra-group rebalancing algorithm CA3 is to perform intra-group rebalance on the power assigned by the executed algorithms except the low state of charge algorithm DA2 and member distribution algorithm DA3. Reference is made to Fig. 8F. Fig. 8F is a schematic diagram illustrating a scene under an execution of an intra-group rebalancing algorithm CA3 according to some embodiments of the present disclosure. As shown in Fig. 8F, the charging point group G1 includes charging points 131~134, in which the charging points 131 has been given with the upper power limit. The weight of each of the charging points 132 and 133 is equal to 22 kW/(22 kW*2+100 kW)=0.153, and the weight of the charging point 134 is equal to 100 kW/(22 kW*2+100 kW)=0.694. The available assigned power of the charging point group G1 is equal to (9.63-2)*2+(84.98-5) kW =95.24 kW. As such, the reassigned power of each of the charging points 132 and 133 is equal to 2 kW+95.24 kW*0.153=16.57 kW. And, the reassigned power of the charging point 134 is equal to 5 kW+95.24 kW*0.694=71.1 kW.

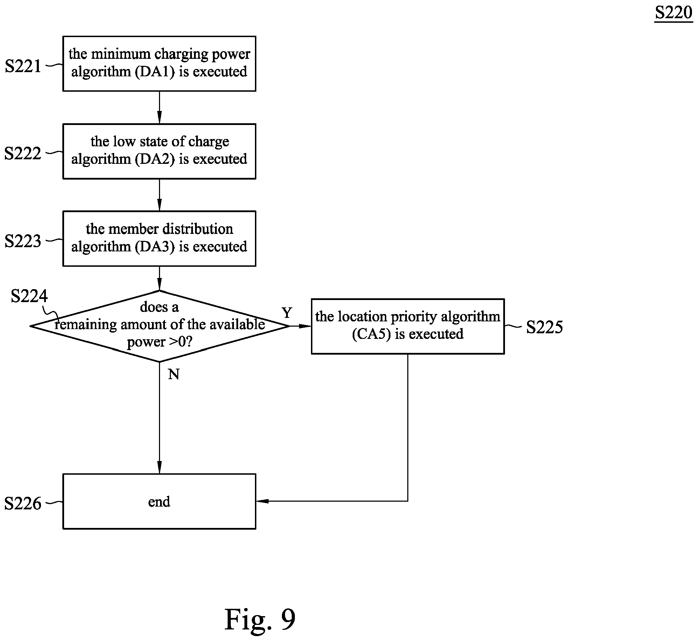

Reference is made to Fig. 9. Fig. 9 is a schematic diagram illustrating step S220 of the charging management method 200 in Fig. 6 according to some embodiments of the present disclosure. As shown in Fig. 9, step S220 includes steps S221~S226. In some embodiments, steps S221~S226 can be performed by the processor 122 in the charging management system 120. In some other embodiments, steps S221~S226 can be performed by the electronic device disposed at the site, which is not intended to limit the present disclosure.

In some embodiments, steps S221~S223 are similar to steps S211~S213 in the embodiments of Fig. 7, and the description is omitted here.

In step S224, whether the remaining power is greater than 0 is determined. In some embodiments, the processor 122 allocates a partial amount of the available power to the charging point 131~13n by executing the steps S221~S223. In some embodiments, the processor 122 subtracts the partial amount of the available power from the available power to calculate a remaining power. In some embodiments, if the remaining power is greater than 0, the processor 122 then performs step S225. If the remaining power is equal to 0, the processor 122 then performs step S226 to end the process.

In step S225, the location priority algorithm CA5 is executed.

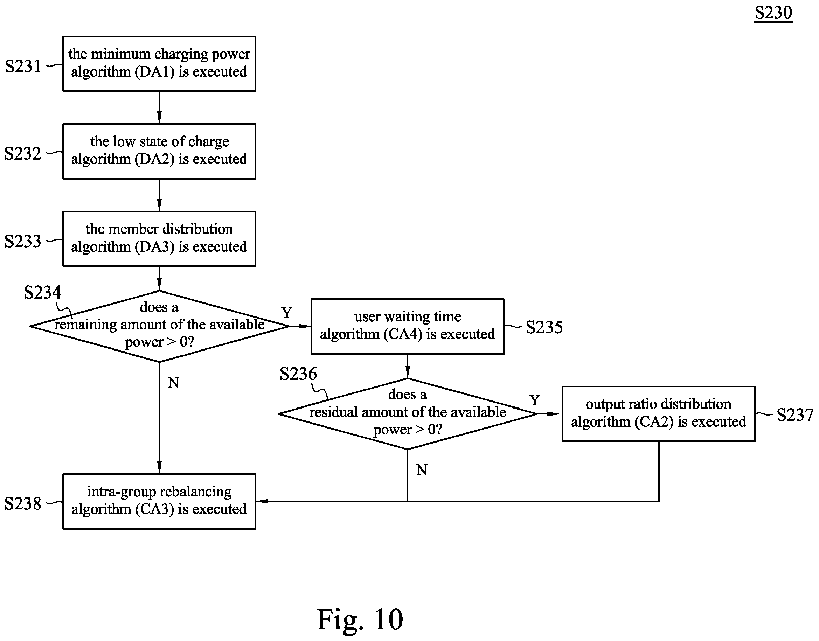

Reference is made to Fig. 10. Fig. 10 is a schematic diagram illustrating step S230 of the charging management method 200 in Fig. 6 according to some embodiments of the present disclosure. As shown in Fig. 10, step S230 includes steps S231~S238. In some embodiments, steps S231~S238 can be can be performed by the processor 122 in the charging management system 120. In some other embodiments, steps S231~S238 can be performed by the electronic device disposed at the site, which is not intended to limit the present disclosure.

In some embodiments, steps S231~S233 are similar to steps S211~S213 in the embodiments of Fig. 7, the description is omitted here.

In step S234, whether the remaining power is greater than 0 is determined. The processor 122 calculates and allocates a partial amount of the available power to the charging point 131~13n by performing steps S231~S233. In some embodiments, the processor 122 subtracts the partial amount of the available power from the available power to calculate a remaining power. In some embodiments, if the remaining power is greater than 0, the processor 122 then performs step S235; if the remaining power is equal to 0, the processor 122 then performs step S236.

In step S235, the user waiting time algorithm CA4 is executed. After the execution of the user waiting time algorithm CA4, the processor 122 then performs step S236.

In step S236, whether a residual amount of the available power is greater than 0 is determined. In some embodiments, the processor 122 calculates and allocates a partial amount of the available power to the charging points 131~13n by performing steps S231~S235, and the processor 122 subtracts the partial amount of the available power from the available power to obtain a residual amount of the available power. In some embodiments, if the residual amount of the available power is greater than 0, the processor 122 then performs step S237; and if the residual amount of available power is equal to 0, the processor 122 then performs step S238

In step S237, the output ratio distribution algorithm CA2 is executed to allocate the residual amount of available power according to the output ratio distribution algorithm CA2.

In step S238, the intra-group rebalancing algorithm CA3 is executed.

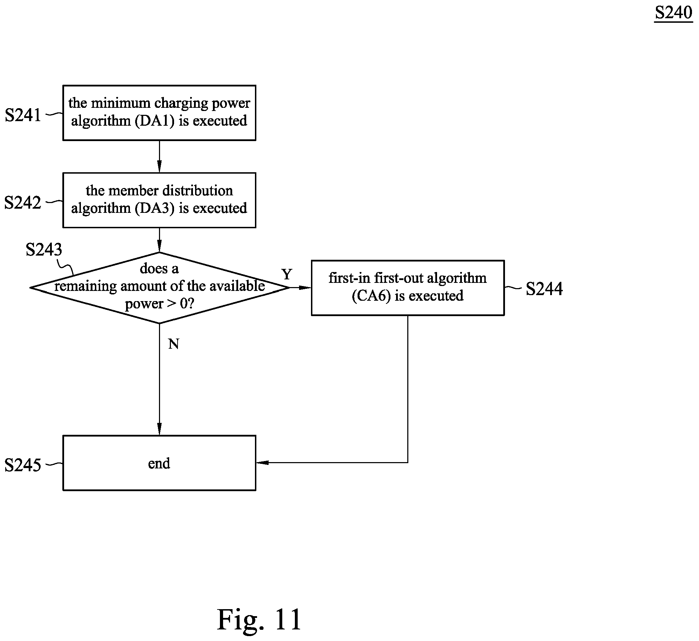

Reference is made to Fig. 11. Fig. 11 is a schematic diagram illustrating step S240 of the charging management method 200 in Fig. 6 according to some embodiments of the present disclosure. As shown in Fig. 11, step S240 includes steps S241~S245. In some embodiments, steps S241~S245 can be performed by the processor 122 in the charging management system 120. In other embodiments, steps S241~S245 can be performed by the electronic device in site, which is not intended to limit the present disclosure.

In step S241, the minimum charging power algorithm DA1 is executed.

In step S242, the member distribution algorithm DA3 is executed.

In step S243, whether the remaining amount of the available power is greater is determined. In some embodiments, the processor 122 allocate a partial amount of the available power to the charging points 131~13n by executing steps S241~S242 in sequence. In some embodiments, the processor 122 subtracts the partial amount of the available power from the available power to calculate a remaining amount of the available power. In some embodiments, if the remaining amount of the available power is greater than 0, the processor 122 then performs step S244; and if the remaining amount of the available power is equal to 0, the processor 122 performs step S245 to end the process.

In step S244, the first-in first-out algorithm CA6 is executed to allocate the remaining amount of the available power to the charging point 131~13n according to the first-in first-out algorithm CA6.

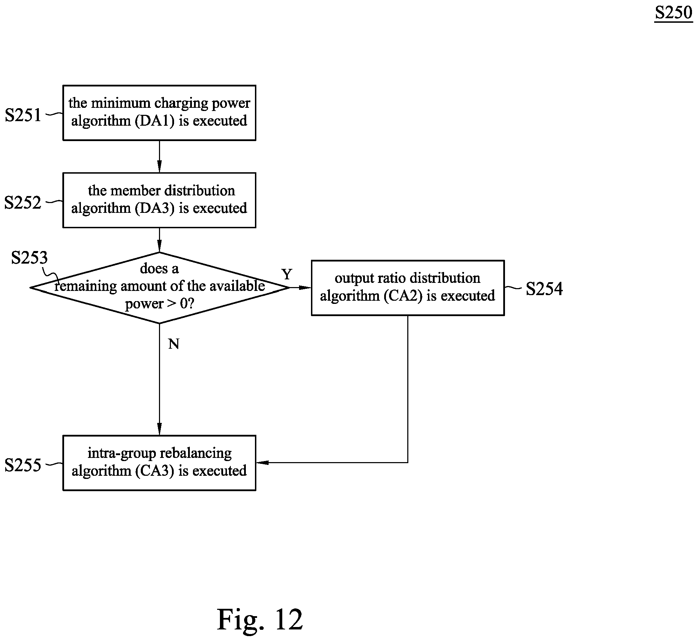

Reference is made to Fig. 12. Fig. 12 is a schematic diagram illustrating step S250 of the charging management method 200 in Fig. 6 according to some embodiments of the present disclosure. As shown in Fig. 12, step S250 includes steps S251~S255. In some embodiments, steps S251~S255 can be performed by the processor 122 in the charging management system 120. In the other embodiments, steps S251~S255 can also by performed by the electronic device in site, which is not intended to limit the present disclosure.

In some embodiments, steps S251~S252 are similar to steps S241~S242 in Fig. 11, and the description is omitted here.

In step S253, whether a remaining amount of the available power is greater than 0 is determined. In some embodiments, the processor 122 allocate a partial amount of the available power to the charging point 131~13n by executing steps S251~S252. In some embodiments, the processor 122 subtracts the partial amount of the available power from the available power to calculate a remaining amount of the available power. In some embodiments, if the remaining amount of the available power is larger than 0, the processor 122 then performs step S254; and if the remaining amount of the available power is equal to 0, the processor 122 then performs step S255.

In step S254, the output ratio distribution algorithm CA2 is executed to allocate the remaining amount of the available power to the charging points 131~13n according to the output ratio distribution algorithm CA2.

In step S255, the intra-group rebalancing algorithm CA3 is executed to perform the intra-group rebalancing on the assigned power of the charging points 131~13n.

Summary, the charging management system 120 of the present disclosure provides twostage power allocation, so as to improve the balance between the power output and the charging speed of each charging point in the charging hub, and to increase the usage efficiency of the charging hub. Based on various distribution strategies (such as the aforementioned distribution strategy for high turn-over rate P1, the distribution strategy for location priority P2, the distribution strategy for user experience priority P3, the distribution strategy for entry order priority P4 and the fair distribution strategy P5) of the charging hubs 130, the charging management system 120 can provide different combinations of the algorithms to achieve serval requirements, such as, maximizing parking space turnover efficiency, optimizing parking space occupancy when vehicles enter, optimizing user experience, optimizing charging efficiency for first entrants, or providing charging efficiency as fair as possible, etc. Specifically, the charging management system 120 can comply with serval requirements of various strategies by executing the preset algorithms 126 under the conditions of avoiding power overload, avoiding exceeding contract capacity and utilizing the existing power facilities of the charging hub 130. As such, the operator of the charging hub 130 can switch different distribution strategies according to their business strategies or business hours, instead of setting each of the charging points one by one. Furthermore, the charging management system 120 of the present disclosure can allocate the available power according to the characteristics of the charging hub 130.

**Claims**

1. A charging management system (120), comprising:

a memory device (124), configured to store a plurality of preset algorithms (DA1, DA2, DA3) and a plurality of custom algorithms (CA1, CA2, CA3, CA4, CA5, CA6); and
a processor (122), connected to the memory device (124), configured to determine at least one of the preset algorithms (DA1, DA2, DA3) and at least one of the custom algorithms (CA1, CA2, CA3, CA4, CA5, CA6) according to a distribution strategy (P1; P2; P3; P4; P5; P6) associated with a charging hub (130), to allocate an available power to a plurality of charging points (131, 132, 133, 134, 13n) of the charging hub, wherein if the processor (122) determines to execute a first subset of the preset algorithms (DA1, DA2, DA3) and a first subset of the custom algorithms (CA1, CA2, CA3, CA4, CA5, CA6) according to a first distribution strategy (P1) associated with the charging hub (130), the processor (122) calculates and allocates a first partial amount of the available power to the charging points (131, 132, 133, 134, 13n) according to the first subset of the preset algorithms (DA1, DA2, DA3), wherein the processor (122) distributes a first remaining amount of the available power to the charging points (131, 132, 133, 134, 13n) according to the first subset of the custom algorithms (CA1, CA2, CA3, CA4, CA5, CA6), and wherein the first remaining amount of the available power is derived by subtracting the first partial amount of the available power from the available power.

2. The charging management system of claim 1, wherein the first distribution strategy (P1) is a distribution strategy for high turn-over rate, and wherein the first subset of the custom algorithms (CA1, CA2, CA3, CA4, CA5, CA6) comprises a low charging time algorithm (CA1), an output ratio distribution algorithm (CA2) and an intra-group rebalancing algorithm (CA3) configured to be executed in order.

3. The charging management system of claim 1, wherein if the processor (122) determines to execute the first subset of the preset algorithms (DA1, DA2, DA3) and a second subset of the custom algorithms (CA1, CA2, CA3, CA4, CA5, CA6) according to a second distribution strategy (P2) associated with the charging hub (130), the processor (122) calculates and allocates the first partial amount of the available power to the charging points (131, 132, 133, 134, 13n) according to the first subset of the preset algorithms (DA1, DA2, DA3), wherein the processor (122) distributes the first remaining amount of the available power to the charging points (131, 132, 133, 134, 13n) according to the second subset of the custom algorithms (CA1, CA2, CA3, CA4, CA5, CA6), wherein the second distribution strategy (P2) is a distribution strategy for location priority, and wherein the second subset of the custom algorithms (CA1, CA2, CA3, CA4, CA5, CA6) comprises a location priority algorithm (CA5).

4. The charging management system of claim 1, wherein if the processor (122) determines to execute the first subset of the preset algorithms (DA1, DA2, DA3) and a third subset of the custom algorithms (CA1, CA2, CA3, CA4, CA5, CA6) according to a third distribution strategy (P3) associated with the charging hub (130), the processor (122) calculates and allocates the first partial amount of the available power to the charging points (131, 132, 133, 134, 13n) according to the first subset of the preset algorithms (DA1, DA2, DA3), wherein the processor (122) distributes the first remaining amount of the available power to the charging points (131, 132, 133, 134, 13n) according to the third subset of the custom algorithms (CA1, CA2, CA3, CA4, CA5, CA6), wherein the third distribution strategy (P3) is a distribution strategy for user experience priority, and wherein the third subset of the custom algorithms (CA1, CA2, CA3, CA4, CA5, CA6) comprises a user waiting time algorithm (CA4), an output ratio distribution algorithm (CA2) and an intra-group rebalancing algorithm (CA3) configured to be executed in order.

5. The charging management system of claim 1, wherein the first subset of the preset algorithms (DA1, DA2, DA3) comprises at least one of a minimum charging power algorithm (DA1), a low state of charge algorithm (DA2) and a member distribution algorithm (DA3).

6. The charging management system of claim 1, wherein the first subset of the preset algorithms (DA1, DA2, DA3) comprises a minimum charging power algorithm (DA1), a low state of charge algorithm (DA2) and a member distribution algorithm (DA3) configured to be executed in order.

7. The charging management system of claim 1, wherein if the processor (122) determines to execute a second subset of the preset algorithms (DA1, DA2, DA3) and a fourth subset of the custom algorithms (CA1, CA2, CA3, CA4, CA5, CA6) according to a fourth distribution strategy (P4) associated with the charging hub (130), the processor (122) calculates and allocates a second partial amount of the available power to the charging points (131, 132, 133, 134, 13n) according to the second subset of the preset algorithms (DA1, DA2, DA3), wherein the processor (122) distributes a second remaining amount of the available power to the charging points (131, 132, 133, 134, 13n) according to the fourth subset of the custom algorithms (CA1, CA2, CA3, CA4, CA5, CA6), wherein the fourth distribution strategy (P4) is a distribution strategy for entry order priority, and wherein the fourth subset of the custom algorithms (CA1, CA2, CA3, CA4, CA5, CA6) comprises a first-in first-out algorithm (CA6).

8. The charging management system of claim 7, wherein the second subset of the preset algorithms (DA1, DA2, DA3) comprises a minimum charging power algorithm (DA1) and a member distribution algorithm (DA3) configured to be executed in order.

9. The charging management system of claim 1, wherein if the processor (122) determines to execute a second subset of the preset algorithms (DA1, DA2, DA3) and a fifth subset of the custom algorithms (CA1, CA2, CA3, CA4, CA5, CA6) according to a fifth distribution strategy (P5) associated with the charging hub (130), the processor (122) calculates and allocates a second partial amount of the available power to the charging points (131, 132, 133, 134, 13n) according to the second subset of the preset algorithms (DA1, DA2, DA3), wherein the processor (122) distributes a second remaining amount of the available power to the charging points (131, 132, 133, 134, 13n) according to the fifth subset of the custom algorithms (CA1, CA2, CA3, CA4, CA5, CA6), wherein the fifth distribution strategy (P5) is a fair distribution strategy, and wherein the fifth subset of the custom algorithms (CA1, CA2, CA3, CA4, CA5, CA6) comprises an output ratio distribution algorithm (CA2) and an intra-group rebalancing algorithm (CA3) configured to be executed in order.

10. The charging management system of claim 9, wherein the second subset of the preset algorithms (DA1, DA2, DA3) comprises a minimum charging power algorithm (DA1) and a member distribution algorithm (DA3) configured to be executed in order.

11. The charging management system of claim 1, wherein the preset algorithms (DA1, DA2, DA3) are general algorithms, and wherein the custom algorithms (CA1, CA2, CA3, CA4, CA5, CA6) are specific algorithms.

12. The charging management system of claim 11, wherein the preset algorithms (DA1, DA2, DA3) comprises a minimum charging power algorithm (DA1), a low state of charge algorithm (DA2) and a member distribution algorithm (DA3).

13. The charging management system of claim 11, wherein the custom algorithms (CA1, CA2, CA3, CA4, CA5, CA6) comprises a low charging time algorithm (CA1), an output ratio distribution algorithm (CA2), an intra-group rebalancing algorithm (CA3), an user waiting time algorithm (CA4), a location priority algorithm (CA5) and a first-in first-out algorithm (CA6).

14. The charging management system of claim 1, wherein the processor (122) determines the distribution strategy according to at least one of characteristics of the charging hub (130).

15. The charging management system of claim 14, wherein the at least one of characteristics of the charging hub (130) comprises a classification of management of the charging hub (130) and a location of the charging hub (130).

16. The charging management system of claim 15, wherein the classification of management of the charging hub (130) is an electric vehicle charge point operator or an electric vehicle fleet operator.

17. The charging management system of claim 15, wherein the charging hub (130) is located at a parking level of a mall building or an office building.

18. The charging management system of claim 1, wherein the distribution strategy is one of a distribution strategy for high turn-over rate, a distribution strategy for location priority, a distribution strategy for user experience priority, a distribution strategy for entry order priority and a fair distribution strategy.

19. The charging management system of claim 1, wherein the processor (122) controls a power allocation among the charging points (131, 132, 133, 134, 13n) according to the at least one of the preset algorithms (DA1, DA2, DA3) and at least one of the custom algorithms (CA1, CA2, CA3, CA4, CA5, CA6), and wherein the charging points (131, 132, 133, 134, 13n) are configured to charge a plurality of electrical vehicles (EV) according to the power allocation.

Fig. 1

120

Fig. 2

Fig. 3

EP 4 521 582 A1

Fig. 4

EP 4 521 582 A1

Fig. 5

S202 — a distribution strategy is determined

| P1 | P2 | P3 | P4 | P5 |

a first subset (DA1~DA3) of the preset algorithms and a first subset (CA1~CA3) of the custom algorithms are read and executed

the first subset (DA1~DA3) of the preset algorithms and a second subset (CA5) of the custom algorithms are read and executed

the first subset (DA1~DA3) of the preset algorithms and a third subset (CA4, CA2, CA3) of the custom algorithms are read and executed

a second subset (DA1, DA3) of the preset algorithms and a fourth subset (CA6) of the custom algorithms are read and executed

the second subset (DA1, DA3) of the preset algorithms and a fifth subset (CA2, CA3) of the custom algorithms are read and executed

S210        S220        S230        S240        S250

Fig. 6

EP 4 521 582 A1

```
S211 ──  the minimum charging power
         algorithm (DA1) is executed
                    │
                    ▼
S212 ──  the low state of charge
         algorithm (DA2) is executed
                    │
                    ▼
S213 ──  the member distribution
         algorithm (DA3) is executed
                    │
                    ▼
S214            ╱ does a ╲                Y        the low charging time
            ◁ remaining amount of the available ▷ ──────▶ algorithm (CA1) is executed ── S215
                ╲ power > 0? ╱                                     │
                    │                                             ▼
                    │ N                          S216         ╱ does a ╲            Y     the output ratio distribution
                    │                                    ◁ residual amount of the available ▷ ──▶ algorithm (CA2) is executed ── S217
                    │                                        ╲ power > 0? ╱
                    │                                             │
                    │                                             │ N
                    ▼                                             │
S218 ──  the intra-group rebalancing  ◀────────────────────────────┘
         algorithm (CA3) is executed
```

Fig. 7

Fig. 8A

EP 4 521 582 A1

Fig. 8B

22kW/ 22kW    10%    AC    131    EVe

2kW/ 22kW    45%    AC    132    EVf

2kW/ 22kW    55%    AC    133    EVg

5kW/ 100kW    65%    DC    134    EVh

2kW/ 22kW    65%    AC    135    EVi

AC    136

20.7kW/ 22kW    70%    AC    137    EVj

5kW/ 100kW    35%    DC    138    EVk

DC    139

100kW/ 100kW    20%    DC    13n    EVl

Fig. 8C

EP 4 521 582 A1

Fig. 8D

EP 4 521 582 A1

Fig. 8E

EP 4 521 582 A1

22kW/
22kW  | 10% |

16.75kW/
22kW  | 45% |

16.75kW/
22kW  | 55% |

71.7kW/
100kW  | 65% |

AC — EVe
131

AC — EVf
132

AC — EVg
133

DC — EVh
134

9.63kW/
22kW  | 65% |

19.3kW/
22kW  | 70% |

55.87kW/
100kW  | 35% |

100kW/
100kW  | 20% |

AC — EVi
135

AC
136

AC — EVj
137

DC — EVk
138

DC
139

DC — EVl
13n

Fig. 8F

S220

S221 — the minimum charging power algorithm (DA1) is executed

S222 — the low state of charge algorithm (DA2) is executed

S223 — the member distribution algorithm (DA3) is executed

S224 — does a remaining amount of the available power >0?

Y → S225 the location priority algorithm (CA5) is executed

N → S226 end

Fig. 9

```
S231 ──  ┌─────────────────────────┐
         │ the minimum charging power │
         │ algorithm (DA1) is executed │
         └─────────────────────────┘
                      │
                      ▼
S232 ──  ┌─────────────────────────┐
         │ the low state of charge  │
         │ algorithm (DA2) is executed │
         └─────────────────────────┘
                      │
                      ▼
S233 ──  ┌─────────────────────────┐
         │ the member distribution  │
         │ algorithm (DA3) is executed │
         └─────────────────────────┘
                      │
                      ▼
S234                                          Y      ┌──────────────────────────┐
      ◇ does a                               ────►   │ user waiting time          │ ── S235
      remaining amount of the available            │ algorithm (CA4) is executed │
        power > 0? ◇                                 └──────────────────────────┘
                      │ N                                         │
                      │                     S236                  ▼
                      │                          ◇ does a                    Y    ┌──────────────────────────┐
                      │                     residual amount of the available ───► │ output ratio distribution  │ ── S237
                      │                            power > 0? ◇                   │ algorithm (CA2) is executed │
                      │                                   │ N                     └──────────────────────────┘
                      ▼                                   │                                │
S238 ──  ┌─────────────────────────┐  ◄─────────────────┴────────────────────────────────┘
         │ intra-group rebalancing  │
         │ algorithm (CA3) is executed │
         └─────────────────────────┘
```

## Fig. 10

EP 4 521 582 A1

EP 4 521 582 A1

```
S241 —| the minimum charging power
        algorithm (DA1) is executed |

              ↓

S242 —| the member distribution
        algorithm (DA3) is executed |

              ↓

S243 —⟨ does a
         remaining amount of the available   —Y→  | first-in first-out algorithm  |— S244
         power > 0? ⟩                                (CA6) is executed

              |N
              ↓
S245 —| end |  ←———————————————————————
```

Fig. 11

S251 — the minimum charging power algorithm (DA1) is executed

S252 — the member distribution algorithm (DA3) is executed

S253 — does a remaining amount of the available power > 0?

Y → output ratio distribution algorithm (CA2) is executed — S254

N

S255 — intra-group rebalancing algorithm (CA3) is executed

EP 4 521 582 A1

Fig. 12

Europäisches
Patentamt

European
Patent Office

Office européen
des brevets

# EUROPEAN SEARCH REPORT

**Application Number**

EP 24 16 5065

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/123360 A1 (EAVES STEPHEN S [US]) 3 May 2018 (2018-05-03) <br><br> * abstract; figures * <br> * paragraphs [0010] - [0030], [0055] - [0074] * <br> - - - - - | 1,2,5,6, 11,12, 14-19 | INV. <br> H02J3/14 <br> B60L53/67 <br> H02J3/32 <br> H02J7/00 <br> H02J7/02 |

**TECHNICAL FIELDS SEARCHED (IPC)**

H02J
B60L

The present search report has been drawn up for all claims

| Place of search | Date of completion of the search | Examiner |
|---|---|---|
| Munich | 28 August 2024 | Hartmann, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 5065

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2024

| Patent document cited in search report | Publication date | Patent family member(s) | | Publication date |
|---|---|---|---|---|
| US 2018123360 A1 | 03-05-2018 | US | 2018123360 A1 | 03-05-2018 |
| | | WO | 2018081549 A1 | 03-05-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Power*